# EUROPEAN PATENT SPECIFICATION

(11) **EP 3 922 429 B1**
(45) Date of publication and mention of the grant of the patent: **02.12.2026**
(21) Application number: 20179658.8
(22) Date of filing: 12.06.2020
(51) Int. Cl.: B29C 33/00, B29C 33/30, B29C 33/02, B29D 99/00, B29L 31/08

(54) **MOLD ADAPTED FOR PRODUCING AT LEAST A PART OF A WIND TURBINE BLADE**
ZUR HERSTELLUNG MINDESTENS EINES TEILS EINER WINDTURBINENSCHAUFEL ANGEPASSTE FORM
MOULE ADAPTÉ POUR LA PRODUCTION D'AU MOINS UNE PARTIE D'UNE PALE D'ÉOLIENNE

(43) Date of publication of application: 15.12.2021
(73) Proprietor: Siemens Gamesa Renewable Energy A/S, 7330 Brande (DK)
(72) Inventor: Henrichsen, Soeren Randrup Daugaard, 9310 Vodskov (DK); Nielsen, Mogens, 9220 Aalborg (DK)
(74) Representative: SGRE-Association

(56) References cited:
- EP-A1- 2 316 629
- WO-A1-2013/097854
- WO-A1-2018/024306
- WO-A1-2019/234050
- WO-A1-2020/114565
- WO-A2-2013/097859
- CN-U- 203 752 382
- DE-A1- 102014 001 445
- DE-C1- 19 833 869

## Description

The invention refers to a mold adapted for producing a wind turbine blade, comprising a support and shell means fixed to the support for accommodating blade building elements to be embedded in a resin matrix.

Wind turbines are commonly known. They comprise a tower and a nacelle arranged on top of the tower. The nacelle comprises a hub, to which several, usually three rotor blades are attached. They interact with blowing wind making the hub rotate. The hub is coupled to an electric generator for producing electric power as commonly known.

A wind turbine respectively a rotor blade is a hollow construction with an elongated blade body, having a root section usually of cylindrical shape, by which it is attached to the hub. The root section is followed by the long blade body which changes its shape significantly from the root to the tip, as it merges from the cylindrical cross section at the root section to an airfoil cross-section, which then runs to the tip.

Such a blade is built of several blade building elements comprising among others fiber webs, wooden or polymer core elements or a web with spar caps etc., which building elements are embedded in a resin matrix. In a first alternative the blade is manufactured from two blade shells, i.e. an upper and a lower shell, which are separately manufactured in respective molds and which are attached to each other for finally building the blade. In a second alternative the blade is produced as a single piece in a single mold by a one-shot infiltration of the resin for embedding all blade building elements in a single step in the resin matrix. The invention refers to a mold adapted for producing both a half shell or, preferably, a complete one-shot blade.

For producing such a half shell or preferably a one-piece wind turbine blade a mold is used, comprising a support and a mold shell means fixed to the support. In this shell means the respective blade building elements like the mentioned fiber webs or core elements etc. are arranged. When the whole setup is accommodated in the shell means, a resin is infiltrated for embedding all these blade building elements, which resin is then cured and transformed to a very stable resin matrix embedding and fixing all the blade building elements, as commonly known. Depending on the item to be produced either only the components for producing a half shell are arranged in the shell means, or the components for producing a complete blade are arranged in the shell means.

The blade design especially in view of the length of the blade is usually specified at an early stage of the development of the turbine on a non-mature design applying certain design uncertainty factors. Based on this early frozen design the geometry of the mold is determined, which mold is then manufactured and defines the final blade geometry. However, during the long-lasting development the blade design may be adapted and may mature both with regard to its design and maybe site-specific loads. It may therefore be possible that the blade design changes especially regarding the blade length. This however entails problems with the previously determined mold concept, as the mold is already produced. The mold then needs to be cut and new mold pieces need to be built and inserted to provide a mold with the updated geometry. For this reason, the length of a blade is usually not changed.

The documents WO 2019/234050 A1, CN 203 752 382 U and DE 198 33 869 C1 disclose examples of modular molds used for manufacturing blades.

It is an object of the invention to provide an improved mold for producing a wind turbine blade.

For solving the problem, the invention refers to a mold as described above, which is characterized in that the shell means comprises at least one main body shell element and several diverse tip shell elements, which are exchangeably fixable to the support.

The invention proposes a modular mold having a certain number of exchangeable tip shell elements, which have different geometries, and which can be fixed to the support. The tip section extends over several meters of the blade length. As usually the tip section is the crucial part of the blade, especially in regard of any changes in the overall blade length, this modular mold allows for easily changing the mold setup in case of any changes in the blade body design, which changes concern the tip section of the blade. The inventive mold may for example be designed based on the first determined blade geometry respectively tip section geometry using a respective tip shell element designated to this specific design. If during development of the blade geometry to a final geometry any changes occur, which concern the tip portion, the tip shell element may easily be changed to another tip shell element having a different geometry, which is designated to the final blade geometry. This allows for easily adapting the mold to a changed blade design.

Preferably, the tip shell elements vary at least in their lengths. This allows for easily changing the overall blade length, if from the first determined design to the finally determined design any changes in the blade lengths occur.

When the mold is set up, either for the first time or when a tip shell element is changed, it is necessary to provide a firm connection of the tip shell element to the adjacent main body shell element, which determines the geometry of the blade body adjacent to the tip section. Either there is only one main boy shell element, or a number of them being arranged on the support in line and connected to each other defining the geometry of the blade body. For connecting any of the several tip shell elements to the adjacent main body shell element, all tip shell elements have a standardized connection interface for connecting each tip shell element to the respective connection interface of the main body shell element. Each tip shell element can easily be changed and connected to the main body shell element using the same connection means, as all connection interfaces of the shell elements and the main body shell element are standardized respectively the same.

In a first embodiment, each connection interface either of the tip shell elements or the main body shell element is a flange having several bores in which, when the flanges abut each other and the bores are aligned, a bolt is inserted for fixing the shell elements with a bolt-nut-connection. According to this embodiment, when the main body shell element and the respective tip shell element are arranged on the support, they are simply arranged to abut each other with their respective interface flanges. Preferably, when the respective elements, which are preferably fixed against a movement to the side, are positioned in the longitudinal direction, their arrangement on the support is such that the bores and the respective flanges are automatically aligned, so that it is easy to insert the respective bolts, on which then respective screws are attached for firmly fixing the shell elements.

In a second alternative, each connection interface of the tip shell elements and the main body shell element is a slanted surface having several bores, in which, when the slanted surfaces abut each other and the bores are aligned, a bolt is inserted for fixing the shell elements with a bolt-nut-connection. In this embodiment, each shell element has a respective slanted surface, which surfaces are arranged above or overlapping each other, so that again the respective bores are, preferably automatically, aligned when the shell elements are in their longitudinal position, so that the bolts can be inserted. While in the first alternative with vertical flanges, where the bolts are arranged horizontally, in the second embodiment with the slanted surfaces the bolts are arranged vertically. To avoid that the bolt heads, which are arranged at the inside of the shell elements, interfere with the outer shell surface, it is preferable that the bolt heads are sunken, so that an even outer body shell is obtained.

Also, regarding the setup of the support, several alternatives are feasible. According to a first alternative, the support comprises a support part for receiving a tip shell element, the length of which support part corresponds to the length of the longest tip shell element comprised within the modular mold system. According to this embodiment also the support is modular. It comprises one or more support parts adapted for receiving the one or the several main body shell elements. If several of the support parts supporting the main body shell elements are provided, they are arranged in line and firmly fixed to each other. Besides this or these support parts for the main body shell elements, the modular support comprises, according to this embodiment, one support part for receiving a tip shell element. This tip shell element is adapted to the length of the longest tip shell element, so that the longest tip shell element can be attached to this tip shell element support part, just like each of the other shorter tip shell elements. So, the single tip shell element support part is adapted to receive any of the diverse tip shell elements.

In an alternative, the support comprises, besides the at least one main body shell element support part for receiving the main body shell element(s), several diverse tip shell element support parts for receiving a tip shell element, which each tip shell element support part corresponding to the length of an assigned tip shell element, whereby the tip shell element support parts are exchangeably fixed to an adjacent main body shell element support part. According to this embodiment, just like the diverse tip shell elements, also a certain number of various tip shell element support parts are provided, which each tip shell element support part being assigned to a certain tip shell element. So, for changing the mold setup, not only the shell means is changed, but also the support, as the respective tip shell element support part is fixed to the adjacent main body shell element support part, whereupon the respective tip shell element is fixed.

As in this embodiment also the respective tip shell element support parts are exchangeable and are therefore connected to the adjacent main body shell element support part, respective interfaces are necessary for firmly fixing these support parts to each other. Again, the tip shell element support parts and the main body shell element support part have standardized, i.e. similar connection interfaces for connecting each tip shell element support part to a respective connection interface of the adjacent main body shell element support part.

Preferably, each connection interface is a flange having several bores in which, when the flanges abut each other and the bores are aligned, a bolt is inserted for fixing the shells with a bolt-nut-connection. Thus, the connection is a flange connection. In an alternative the connection is a plug-in connection. The interfaces comprise e.g. pipe-like elements with one element engaging the other, while they are fixed by snap-on or latching connection elements.

The support, the tip shell element support parts or the at least one main body shell element support part are preferably frame constructions built from several beam or rod elements. The support respectively the support parts are a, preferably light-weight, timber framework, which on the other hand is stable enough to carry the weight of the shell means and all building parts respectively the finally produced blade.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a principle illustration, in part, of an inventive mold,
- Fig. 2: a part of the inventive mold with a framework support and a tip shell element and a main body shell element,
- Fig. 3: a principle illustration of a shell element connection according to a first element,
- Fig. 4: a principle illustration of a shell element connection of a second embodiment,
- Fig. 5: a partial view of an inventive mold having a standardized tip shell element support adapted to receive tip shell elements of different lengths, and
- Fig. 6: an inventive mold having exchangeable tip shell element support parts adapted to receive respective assigned tip shell elements.

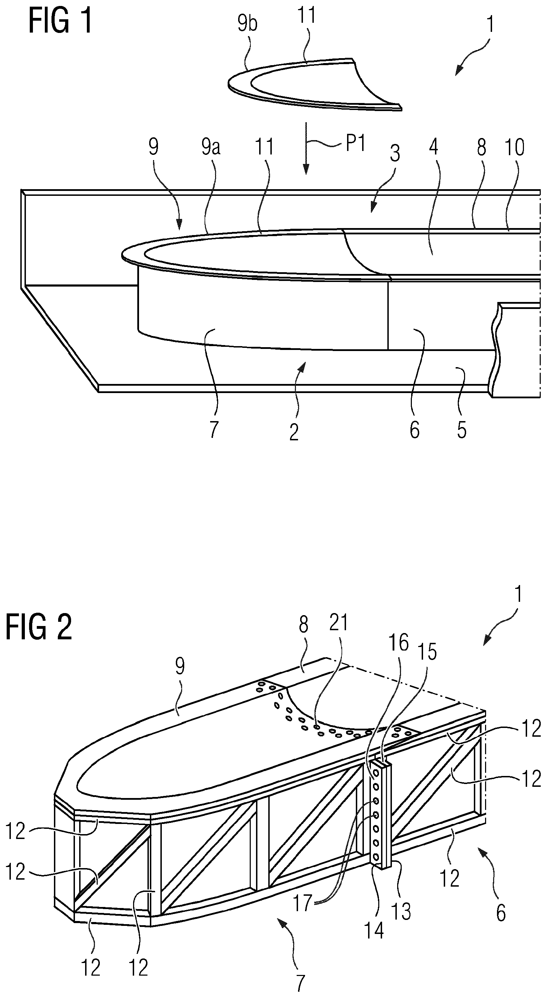

Fig. 1 shows an inventive mold 1, adapted for preferably producing a complete wind turbine blade, comprising a support 2 and shell means 3 fixed to the support 2 for accommodating blade building elements to be embedded in the shell means 3 respectively on the upper surface 4 of the shell means 3. The support 2 and the shell means 3 are arranged in a trough 5.

The support 2 comprises one or more main shell element support parts 6. When several main shell element support parts 6 are provided, they are arranged in line and fixed to each other, depending on the length of the blade body part to be produced.

The support 2 further comprises a tip shell element support part 7, which is attached to the adjacent main body shell element support part 6 and which is the end of the support 2.

The support 2 is adapted to receive respectively carry the shell means 3. The shell means 3 itself comprises several shell elements, i.e. at least one or more main body shell elements 8, which are received by the at least one main body shell element support part 6, with the number of main body shell elements 8 depending on the total length of the main body part which is produced by these main body shell elements 8.

Furthermore, the shell means 3 comprises at least two, preferably more tip shell elements 9, two of which are shown in fig. 1. Arranged on the tip shell element support part 7 is a first tip shell element 9a, which is the longest tip shell element within the set of tip shell elements 9 having different lengths. It extends over the whole length of the tip shell element support part 7.

Also shown is a second tip shell element 9b, which is remarkably shorter than the first tip shell element 9a. As shown by the arrow P1, the tip shell element 9b can be attached to the tip shell element support part 7 in exchange to the tip shell element 9a, which element exchange changes the whole length of the blade part produced with the mold 1 respectively the shell means 3. By simply changing the respective tip shell element 9 it is possible to easily change the length of the mold 1 respectively the shell means 3 in order to adapt it to any changes in the blade design, especially the blade length.

It is to be noted, that preferably the diverse tip shell elements differ in their lengths. In an alternative or in addition it is also possible that they for example differ in their cross-section, which may for example be lower or narrower etc., with the length of the tip shell elements 9 being the same. Also, with these set of tip shell elements it is possible to adapt the mold 1 to any changes in the blade design.

As shown, all shell elements, the main body shell elements 8 and the tip shell elements 9, have a respective rim 10, 11, with which they rest on the respective support part 6, 7, so that it is easily possible to arrange the respective shell element on the support 2.

Fig. 2 shows an enlarged perspective view of the mold 1 with the tip shell element support part 7 and, in part, the adjacent main bodyshell element support part 6. They are all built as a framework made of several beams or rods 12 made of any suitable material. As is shown, the adjacent main body shell element support part 6 and the tip shell element support part 7 comprise respective interfaces 13, 14, here respective flanges 15, 16 having respective bores 29, which are aligned and which receive respective bolt connections not shown in detail in fig. 2. This allows for a simple but firm connection of this support part 6, 7.

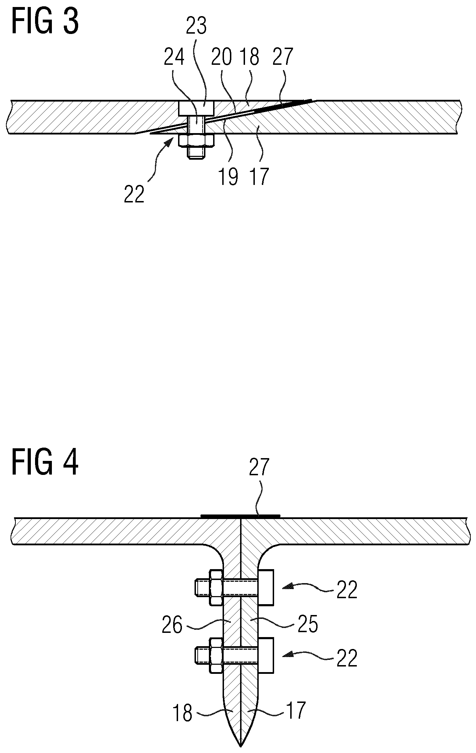

Also shown in this embodiment is the connection of the main body shell element 8 and the tip shell element 9. As shown, they both have respective connection interfaces 17, 18, see also fig. 3, in the form of slanted surfaces 19, 20, which abut or overlay each other, and which are provided with respective bores 21. The bores 21 are in alignment and receive a respective bolt-nut-connection 22, as shown in fig. 3. The head 23 of the bolt 24 is preferably sunk in the inner surface of the tip shell element 9, so that it does not interfere with the smooth surface of the blade body part to be built.

The arrangement is preferably such that both the main body shell element 8 and the tip shell element 9 can be arranged only in a defined lateral position, so that, when they are both attached to the support 2 from above, they are automatically aligned in a lateral direction. It is only necessary to bring the respective interfaces 18, 19 above each other, which may also be automatically done when the tip shell element 9 is in place, so that then all bores 21 are automatically aligned.

Fig. 4 shows another embodiment of the respective interfaces 17, 18 for attaching the main body shell element 8 to the tip shell element 9. Here, the interfaces 17, 18 are respective flanges 25, 26 having respective bores receiving respective bolt-nut-connections 22. Different to the embodiment of fig. 3, where the respective bolt-nut-connection 22 is vertically arranged, the bolt-nut-connection 22 according to fig. 4 is arranged in a horizontal direction.

Also shown is the possibility to bring a glue or any other sealing means 27, which may also be a lamination means, right into the interface zone for sealing this interface slit between the respective shell elements 8, 9.

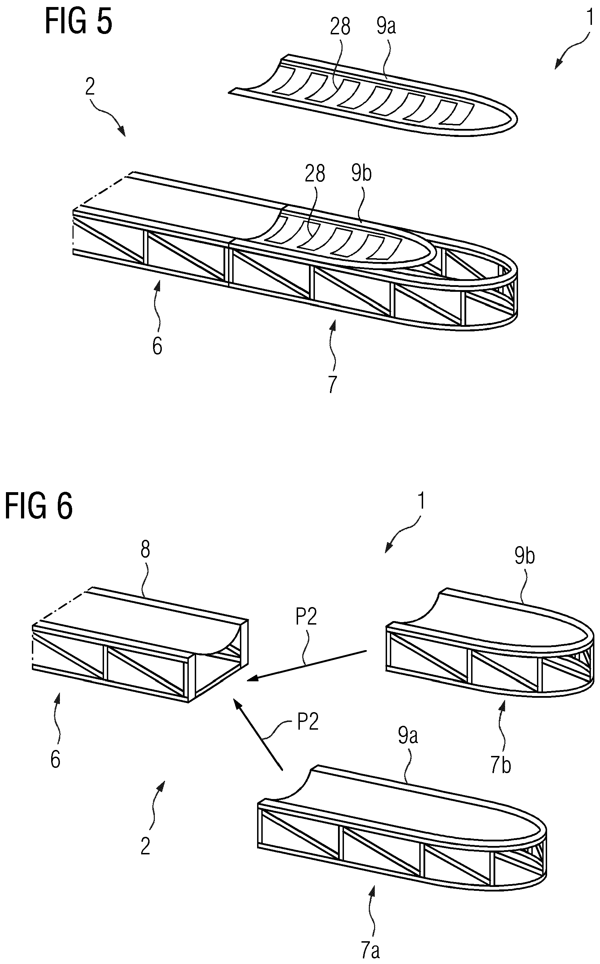

Fig. 5 shows an embodiment of an inventive mold 1, where the support 2 comprises a tip shell element support part 7 having a length which corresponds to the length of the longest tip shell element 9a (as explained with regard to fig. 1), while, as shown in fig. 5, a shorter tip shell element 9b is arranged on the tip shell element support part 7. As clearly shown, the tip shell element support part 7 is much longer than the short tip shell element 9b, but, if need be, the longer or longest tip shell element 9a can be arranged on the tip shell element support part 7 in exchange to the tip shell element 9b without changing anything at the tip shell element support part 7. Thus, the tip shell element support part 7 is a universal support part.

In an alternative, as shown in fig. 6, where again an inventive mold 1 is shown, it is possible to use a modular support 2. The figure shows the main body shell element support part 6 with the main body shell element 8 arranged on it. It furthermore shows two different tip shell element support parts 7a, 7b. Both are adapted to receive a certain tip shell element 9a, 9b, which also differ in their lengths. The length of the respective tip shell element support part 7a, 7b is adapted to the length of the respective tip shell element 9a, 9b, so that they are perfectly fit to the respective tip shell element support part 7a, 7b. As shown by the arrows P2, it is in this embodiment possible to also exchange the respective tip shell element support part 7 respectively 7a, 7b, when a change of the respective tip shell element 9 respectively 9a, 9b is necessary.

The respective main boy shell elements 8 and the tip shell elements 9 respectively 9a, 9b may be simple shell elements, but they may also be provided with a heating means 28, as shown in fig. 5. This heating means may be a tube, through which hot water or the like circulates, or it may be a wire for providing an electric resistance heating or the like. Although the heating means 28 is only shown at the respective tip shell elements 9a, 9b, any such heating means 28 may also be provided at the respective adjacent main body shell elements 8. Preferably, the heating means 28 of neighbouring shell elements, no matter if it is a tip shell element or a main body shell element, are connected with each other, so that for example a long heating pipe is provided, which extends over the whole length of the shell means 3, or that a respective long electric heating wire is realized extending over the whole length of the shell means 3, so that the respective heating fluid or electrical connection is provided at one certain point for heating the whole shell means 3.

The above depicted various embodiments of an inventive mold are preferably adapted to produce a single complete wind turbine blade. Nevertheless such a mold setup can also be used for producing only a part of a wind turbine blade in form of a half upper or lower shell. In any embodiment the inventive modular mold setup allows for a simple change of the mold respectively shell design to adapt the mold to certain changes in the blade design, especially changed in the blade length.

Although the present invention has been described in detail with reference to the preferred embodiment, the present invention is not limited by the disclosed examples from which the skilled person is able to derive other variations without departing from the scope of the invention as defined by the appended claims.

## Claims

1. Modular mold adapted for producing at least a part of a wind turbine blade, comprising a support (2) and shell means (3) fixed to the support (2) for accommodating blade building elements to be embedded in a resin matrix, wherein the shell means (3) comprises at least one main body shell element (8) and several diverse tip shell elements (9, 9a, 9b), which are exchangeably fixable to the support (2), wherein the support (2) comprises a tip shell element support part (7) for receiving a tip shell element (9, 9a, 9b), the length of which tip shell element support part (7) corresponds to the length of the longest tip shell element (9, 9a, 9b) such that the longest tip shell element (9a) and each of the shorter tip shell elements (9b) can be attached to this tip shell element support part (7), wherein the tip shell elements (9, 9a, 9b) have a rim (11) with which they rest on the tip shell element support part (7).

2. Modular mold adapted for producing at least a part of a wind turbine blade, comprising a support (2) and shell means (3) fixed to the support (2) for accommodating blade building elements to be embedded in a resin matrix, wherein the shell means (3) comprises at least one main body shell element (8) and several diverse tip shell elements (9, 9a, 9b), which are exchangeably fixable to the support (2), wherein at least one main body shell element support part (6) and several diverse tip shell element support parts (7a, 7b) for receiving a tip shell element (9a, 9b), with each tip shell element support part (7a, 7b) corresponding to the length of an assigned tip shell element (9a, 9b), whereby the tip shell element support parts (7a, 7b) are exchangeable fixable to an adjacent main body shell element support part (6).

3. Mold according to claim 2, **characterised in that** the tip shell element support parts (7a, 7b) and the main body shell element support part (6) have a standardized connection interface (13, 14) for connecting each tip shell element support part (7a, 7b) to the adjacent main body shell element support part (6).

4. Mold according to claim 3, **characterised in that** each connection interface (13, 14) is a flange (15, 16) having several bores (17), in which, when the flanges (15, 16) abut each other and the bores (17) are aligned, a bolt is inserted for fixing the shells with a bolt-nut-connection.

5. Modular mold according to one of the preceding claims, **characterised in that** the tip shell elements vary (9, 9a, 9b) at least in their length.

6. Modular mold according to one of the preceding claims, **characterised in that** the tip shell elements (9, 9a, 9b) have a standardized connection interface (18) for connecting each tip shell element (9, 9a, 9b) to a respective connection interface (17) of the adjacent main body shell element (8).

7. Modular mold according to claim 6, **characterised in that** each connection interface (17, 18) is a flange having several bores (21), in which, when the flanges (25, 26) abut each other and the bores (21) are aligned, a bolt (24) is inserted for fixing the shell elements (8, 9, 9a, 9b) with a bolt-screw-connection (22).

8. Modular mold according to claim 6, **characterised in that** each connection interface (17, 18) is a slanted surface (19, 20) having several bores (21), in which, when the slanted surfaces (19, 20) abut each other and the bores (21) are aligned, a bolt (24) is inserted for fixing the shell elements with a bolt-nut-connection (22).

9. Modular mold according to one or the preceding claims, **characterised in that** the support (2), the tip shell element support parts (7, 7a, 7b) or the at least one main body shell element support part (6) are frame constructions built from several beam or rod elements (12).

## Patentansprüche

1. Modulare Form, die zum Herstellen mindestens eines Teils einer Windturbinenschaufel angepasst ist, umfassend einen Träger (2) und Schalenmittel (3), die an dem Träger (2) fixiert sind, zum Aufnehmen von Schaufelbauelementen, die in eine Harzmatrix einzubetten sind, wobei das Schalenmittel (3) mindestens ein Hauptkörperschalenelement (8) und mehrere verschiedene Spitzenschalenelemente (9, 9a, 9b) umfasst, die austauschbar an dem Träger (2) fixierbar sind, wobei der Träger (2) einen Spitzenschalenelementstützteil (7) zum Aufnehmen eines Spitzenschalenelements (9, 9a, 9b) umfasst, wobei die Länge des Spitzenschalenelementstützteils (7) der Länge des längsten Spitzenschalenelements (9, 9a, 9b) entspricht, sodass das längste Spitzenschalenelement (9a) und jedes der kürzeren Spitzenschalenelemente (9b) an diesem Spitzenschalenelementstützteil (7) angebracht werden kann, wobei die Spitzenschalenelemente (9, 9a, 9b) einen Rand (11) aufweisen, mit dem sie auf dem Spitzenschalenelementstützteil (7) aufliegen.

2. Modulare Form, die zum Herstellen mindestens eines Teils einer Windturbinenschaufel angepasst ist, umfassend einen Träger (2) und Schalenmittel (3), die an dem Träger (2) fixiert sind, zum Aufnehmen von Schaufelbauelementen, die in eine Harzmatrix einzubetten sind, wobei das Schalenmittel (3) mindestens ein Hauptkörperschalenelement (8) und mehrere verschiedene Spitzenschalenelemente (9, 9a, 9b) umfasst, die austauschbar an dem Träger (2) fixierbar sind, wobei mindestens ein Hauptkörperschalenelementstützteil (6) und mehrere verschiedene Spitzenschalenelementstützteile (7a, 7b) zum Aufnehmen eines Spitzenschalenelements (9a, 9b), wobei jedes Spitzenschalenelementstützteil (7a, 7b) der Länge eines zugeordneten Spitzenschalenelements (9a, 9b) entspricht, wodurch die Spitzenschalenelementstützteile (7a, 7b) an einem benachbarten Hauptkörperschalenelementstützteil (6) austauschbar fixierbar sind.

3. Form nach Anspruch 2, **dadurch gekennzeichnet, dass** die Spitzenschalenelementstützteile (7a, 7b) und das Hauptkörperschalenelementstützteil (6) eine standardisierte Verbindungsschnittstelle (13, 14) zum Verbinden jedes Spitzenschalenelementstützteils (7a, 7b) mit dem benachbarten Hauptkörperschalenelementstützteil (6) aufweisen.

4. Form nach Anspruch 3, **dadurch gekennzeichnet, dass** jede Verbindungsschnittstelle (13, 14) ein Flansch (15, 16) ist, der mehrere Bohrungen (17) aufweist, in die, wenn die Flansche (15, 16) aneinander anliegen und die Bohrungen (17) ausgerichtet sind, eine Schraube zum Fixieren der Schalen mit einer Schrauben-Mutter-Verbindung eingeführt wird.

5. Modulare Form nach einem der vorhergehenden Ansprüche, **dadurch gekennzeichnet, dass** die Spitzenschalenelemente mindestens in ihrer Länge variieren (9, 9a, 9b).

6. Modulare Form nach einem der vorhergehenden Ansprüche, **dadurch gekennzeichnet, dass** die Spitzenschalenelemente (9, 9a, 9b) eine standardisierte Verbindungsschnittstelle (18) zum Verbinden jedes Spitzenschalenelements (9, 9a, 9b) mit einer jeweiligen Verbindungsschnittstelle (17) des benachbarten Hauptkörperschalenelements (8) aufweisen.

7. Modulare Form nach Anspruch 6, **dadurch gekennzeichnet, dass** jede Verbindungsschnittstelle (17, 18) ein Flansch ist, der mehrere Bohrungen (21) aufweist, in die, wenn die Flansche (25, 26) aneinander anliegen und die Bohrungen (21) ausgerichtet sind, eine Schraube (24) zum Fixieren der Schalenelemente (8, 9, 9a, 9b) mit einer Schrauben-Mutter-Verbindung (22) eingeführt wird.

8. Modulare Form nach Anspruch 6, **dadurch gekennzeichnet, dass** jede Verbindungsschnittstelle (17, 18) eine schräge Fläche (19, 20) ist, die mehrere Bohrungen (21) aufweist, in die, wenn die schrägen Flächen (19, 20) aneinander anliegen und die Bohrungen (21) ausgerichtet sind, eine Schraube (24) zum Fixieren der Schalenelemente mit einer Schrauben-Mutter-Verbindung (22) eingeführt wird.

9. Modulare Form nach einem oder den vorhergehenden Ansprüchen, **dadurch gekennzeichnet, dass** der Träger (2), die Spitzenschalenelementstützteile (7, 7a, 7b) oder das mindestens eine Hauptkörperschalenelementstützteil (6) Rahmenkonstruktionen sind, die aus mehreren Balken- oder Stangenelementen (12) gebaut sind.

## Revendications

1. Moule modulaire adapté pour la production d'au moins une partie d'une pale d'éolienne, comprenant un support (2) et des moyens de coque (3) fixés au support (2) pour loger des éléments de construction de pale destinés à être incorporés dans une matrice en résine, dans lequel les moyens de coque (3) comprennent au moins un élément de coque de corps principal (8) et plusieurs éléments de coque de pointe (9, 9a, 9b) différents, qui peuvent être fixés de manière échangeable au support (2), dans lequel le support (2) comprend une partie de support d'élément de coque de pointe (7) pour recevoir un élément de coque de pointe (9, 9a, 9b), la longueur de cette partie de support d'élément de coque de pointe (7) correspondant à la longueur de l'élément de coque de pointe (9, 9a, 9b) le plus long de sorte que l'élément de coque de pointe (9a) le plus long et chacun des éléments de coque de pointe (9b) plus courts puissent être fixés à cette partie de support d'élément de coque de pointe (7), dans lequel les éléments de coque de pointe (9, 9a, 9b) présentent un rebord (11) avec lequel ils reposent sur la partie de support d'élément de coque de pointe (7).

2. Moule modulaire adapté pour la production d'au moins une partie d'une pale d'éolienne, comprenant un support (2) et des moyens de coque (3) fixés au support (2) pour loger des éléments de construction de pale destinés à être incorporés dans une matrice en résine, dans lequel les moyens de coque (3) comprennent au moins un élément de coque de corps principal (8) et plusieurs éléments de coque de pointe (9, 9a, 9b) différents, qui peuvent être fixés de manière échangeable au support (2), dans lequel sont prévues au moins une partie de support d'élément de coque de corps principal (6) et plusieurs parties de support d'élément de coque de pointe (7a, 7b) différentes pour recevoir un élément de coque de pointe (9a, 9b), chaque partie de support d'élément de coque de pointe (7a, 7b) correspondant à la longueur d'un élément de coque de pointe (9a, 9b) associé, moyennant quoi les parties de support d'élément de coque de pointe (7a, 7b) peuvent être fixées de manière échangeable à une partie de support d'élément de coque de corps principal (6) adjacente.

3. Moule selon la revendication 2, **caractérisé en ce que** les parties de support d'élément de coque de pointe (7a, 7b) et la partie de support d'élément de coque de corps principal (6) présentent une interface de liaison standardisée (13, 14) pour relier chaque partie de support d'élément de coque de pointe (7a, 7b) à la partie de support d'élément de coque de corps principal (6) adjacente.

4. Moule selon la revendication 3, **caractérisé en ce que** chaque interface de liaison (13, 14) soit une bride (15, 16) présentant plusieurs alésages (17), dans lesquels, lorsque les brides (15, 16) viennent en butée l'une contre l'autre et que les alésages (17) sont alignés, un boulon est inséré afin de fixer les coques avec une liaison boulon-écrou.

5. Moule modulaire selon l'une des revendications précédentes, **caractérisé en ce que** les éléments de coque de pointe (9, 9a, 9b) varient au moins dans leur longueur.

6. Moule modulaire selon l'une des revendications précédentes, **caractérisé en ce que** les éléments de coque de pointe (9, 9a, 9b) présentent une interface de liaison standardisée (18) pour relier chaque élément de coque de pointe (9, 9a, 9b) à une interface de liaison (17) respective de l'élément de coque de corps principal (8) adjacent.

7. Moule modulaire selon la revendication 6, **caractérisé en ce que** chaque interface de liaison (17, 18) soit une bride présentant plusieurs alésages (21), dans lesquels, lorsque les brides (25, 26) viennent en butée l'une contre l'autre et que les alésages (21) sont alignés, un boulon (24) est inséré afin de fixer les éléments de coque (8, 9, 9a, 9b) avec une liaison boulon-vis (22).

8. Moule modulaire selon la revendication 6, **caractérisé en ce que** chaque interface de liaison (17, 18) soit une surface inclinée (19, 20) présentant plusieurs alésages (21), dans lesquels, lorsque les surfaces inclinées (19, 20) viennent en butée l'une contre l'autre et que les alésages (21) sont alignés, un boulon (24) est inséré afin de fixer les éléments de coque avec une liaison boulon-écrou (22).

9. Moule modulaire selon l'une des revendications précédentes, **caractérisé en ce que** le support (2), les parties de support d'élément de coque de pointe (7, 7a, 7b) ou l'au moins une partie de support d'élément de coque de corps principal (6) soient des structures de cadre constituées de plusieurs éléments de poutre ou de tige (12).
